# EUROPÄISCHE PATENTSCHRIFT

(11) **EP 1 568 473 B1**
(45) Veröffentlichungstag und Bekanntmachung des Hinweises auf die Patenterteilung: **27.04.2016**
(21) Anmeldenummer: 04027816.0
(22) Anmeldetag: 24.11.2004
(51) Int. Cl.: B29C 70/34, B29C 70/38, B29C 70/46, B29C 53/56, B29C 53/82, B62D 25/08, B29C 70/08, B29C 53/84, B29K 21/00, B29K 105/08

(54) **Verfahren und Vorrichtung zur Herstellung eines mit Endlosfasern verstärkten Polymer-Formteils**
Process and apparatus for producing a plastic part reinforced by continuous fibers
Procédé et dispositif de fabrication d'un produit plastique renforcé de fibres longues

(30) Priorität: 14.02.2004 DE 102004007313
(43) Veröffentlichungstag der Anmeldung: 31.08.2005
(73) Patentinhaber: Fraunhofer-Gesellschaft zur Förderung der angewandten Forschung e.V., 80686 München (DE)
(72) Erfinder: Krause, Wenzel Dipl.-Ing., 76185 Karlsruhe (DE); Reif, Manfred Dipl.-Ing., 76327 Pfinztal (DE); Walch, Michael Dipl.-Ing., 76327 Pfinztal (DE); Henning, Frank Dipl.-Ing., 76327 Pfinztal (DE)
(74) Vertreter: Lichti - Patentanwälte Partnerschaft mbB

(56) Entgegenhaltungen:
- EP-A1- 0 591 822
- WO-A-01/64570
- FR-A- 2 739 802
- US-A- 4 460 531
- US-A- 5 203 940
- US-A- 5 558 738
- US-A- 6 004 650
- US-A1- 2004 021 250

## Beschreibung

Die Erfindung betrifft ein Verfahren zur Herstellung eines mit Endlosfasern verstärkten Polymer-Formteils, insbesondere zum Einsatz in der Automobilindustrie, indem die mit wenigstens einem zumindest teilweise plastifizierten, in einen schmelzflüssigen Zustand überführten Polymer imprägnierten Endlosfasern mittels einer Handhabungseinrichtung derart auf einer Hilfsform angeordnet werden, daß die flächige und/oder räumliche Orientierung der Endlosfasern im wesentlichen der in dem Polymer-Formteil vorgesehenen Orientierung der Endlosfasern entspricht, wobei die orientierten Endlosfasern mittels der Hilfsform anschließend in wenigstens ein zweiteiliges, offenes Formwerkzeug überführt und dort abgelegt werden, wonach das Formwerkzeug geschlossen wird und die imprägnierten, orientierten Endlosfasern allein oder unter Zugabe wenigstens eines weiteren, zumindest einen Teil der Polymermatrix des zu erzeugenden Polymer-Formteils bildenden, plastifizierbaren, in einen schmelzflüssigen Zustand überführbaren Polymers unter Bildung des endlosfaserverstärkten Polymer-Formteils verpreßt werden, wobei das Polymer-Formteil anschließend abgekühlt und dem Formwerkzeug entnommen wird. Die Erfindung betrifft ferner eine Vorrichtung, welche zur Durchführung eines solchen Verfahrens zur Herstellung eines mit Endlosfasern verstärkten Polymer-Formteils geeignet ist, mit einer Handhabungseinrichtung, welche zum Anordnen von mit wenigstens einem zumindest teilweise plastifizierten, in einen schmelzflüssigen Zustand überführten Polymer imprägnierten Endlosfasern auf einer Hilfsform ausgebildet ist, wobei die Hilfsform zur Aufnahme der Endlosfasern im wesentlichen gemäß der gewünschten flächigen und/oder räumlichen Orientierung der Endlosfasern in dem Polymer-Formteil ausgebildet ist, und mit wenigstens einem, zumindest zweiteiligen Formwerkzeug, in welches die Endlosfasern mittels der Hilfsform überführbar und dort ablegbar sind.

Mit Endlosfasern verstärkte Polymer-Formteile finden insbesondere in der Automobilindustrie, z.B. für Stoßfänger, Sitzstrukturen, Karosserieteile, wie Frontendträger oder dergleichen, bis hin zu kompletten Karosserien, aber auch überall dort, wo eine gezielte Verstärkung des Formteils in Richtung einwirkender Lasten erwünscht ist, z.B. bei konstruktiven Profilen, verbreitet Verwendung. Im Gegensatz zu Formteilen, welche mit Kurz- und/oder Langfasern mit statistischer Einmischung der Fasern verstärkt sind, bieten Endlosfasern den Vorteil einer möglichen Anordnung in Richtung einwirkender Lasten - im Falle von Fahrzeugteilen insbesondere in Richtung der im Kollisionsfall einwirkenden Aufprallkräfte - so daß das Polymer-Formteil vor einem Einknicken im wesentlichen senkrecht zur Erstreckungsrichtung der Endlosfasern weitestgehend bewahrt wird. Folglich ist eine richtungsabhängige Verstärkung des jeweiligen Bauteils und im Hinblick auf das gegenüber Metall geringere Gewicht von Kunststoffen eine Ausführung des Bauteils in Leichtbauweise möglich.

Zur Herstellung von endlosfaserverstärkten Polymer-Formteilen sind eine Vielzahl von Verfahren bekannt, wobei insbesondere Spritzgieß- und Preßverfahren zur Anwendung kommen. Dabei werden die mit einem plastifizierten Polymer imprägnierten Endlosfasern in ein geöffnetes Formwerkzeug überführt und dort abgelegt, wonach das Formwerkzeug unter Gewährleistung eines hinreichenden Formdruckes geschlossen, das Formwerkzeug anschließend abgekühlt und das fertige Formteil dem Formwerkzeug entnommen wird. Die Polymermatrix des Formteils kann einerseits ausschließlich von dem schmelzflüssigen, thermoplastischen Imprägniermaterial der Endlosfasern gebildet sein, andererseits können insbesondere auch zusätzliche plastifizierbare Polymere in Form einer Preßmasse bzw. Schmelze oder auch in Granulatform in das Formwerkzeug eingebracht werden, um Polymer-Formteile mit praktisch beliebiger Form zu erzeugen, welche eine Endlosfaserverstärkung in der gewünschten Orientierung aufweisen.

Als Endlosfasern können je nach Einsatzzweck beliebige bekannte Verstärkungsfasern, z.B. synthetische Fasern, wie Carbon-, Glas-, Metall-, Aramidfasern oder dergleichen, natürliche Fasern mit einer hinreichenden Festigkeit, wie Cellulose, Hanffasern etc., oder auch Hybridfasern, z.B. Mischungen aus Polymer- und Verstärkungsfasern, in der jeweils gewünschten Form, z.B. in Form von Bändern, sogenannten Tapes, oder Garnen, sogenannten Rovings, eingesetzt werden. Die Endlosfasern können entweder bereits mit einem plastifizierbaren Polymer vorimprägniert sein und dieses anläßlich der Verarbeitung in einen schmelzflüssigen Zustand überführt werden, was mittels entsprechenden Heizkammern geschieht, durch welche die z.B. von einer Spindel abgewickelten Endlosfasern hindurchgeführt werden, oder die rohen Endlosfasern werden unter Anhaften des Imprägnier-Polymers durch eine Schmelze desselben hindurchgeführt, wie es z.B. aus der EP 0 364 829 B1 bekannt ist.

Um bei dem erzeugten Polymer-Formteil eine einwandfreie Haftung zwischen den Endlosfasern und seiner Polymermatrix sicherzustellen - sei es zwischen den Endlosfasern und dem Imprägnier-Polymer oder sei es zwischen letzerem und einem weiteren Polymer, z.B. in Form einer Preßmasse als Polymermatrix für das vorgesehene Formteil - ist es grundsätzlich erforderlich, daß die imprägnierten Endlosfasern im heißen Zustand verpreßt werden, d.h. bei einer Temperatur, bei welcher zumindest das Imprägnier-Polymer im geschmolzenen Zustand vorliegt. Andererseits ist die Handhabung der mit dem schmelzflüssigen Polymer imprägnierten Endlosfasern und insbesondere deren gezielte Anordnung der Endlosfasern in dem Formwerkzeug gemäß der jeweils gewünschten Faserorientierung in dem herzustellenden Formteil verhältnismäßig kompliziert und zeitaufwendig, so daß zur Herstellung eines Formteils in der Regel große Taktzeiten erforderlich ist, was einerseits zu einer Auskühlung der Endlosfasern vor dem Verpressen und somit zu einer verminderten Produktqualität, andererseits zu einer nur unbefriedigenden Rentabilität der Fertigungsanlage führt.

Die EP 1 099 538 A1 beschreibt ein Verfahren zur Überführung von Verstärkungsfasern in ein Formwerkzeug entsprechend der in dem zu erzeugenden Formteil vorgesehenen Faserorientierung. Dabei werden vorimprägnierte Endlosfasern unter Plastifizierung des Imprägniermaterials erhitzt und anschließend zu Bandstücken abgelängt. Die Bandstücke werden auf einer Ausgabestelle der Plastifiziereinrichtung abgelegt. Anschließend werden die abgelängten Bandstücke nacheinander mittels einer Handhabungseinrichtung ergriffen und einzeln in der gewünschten Anordnung in dem Formwerkzeug abgelegt. Die Handhabungseinrichtung ist hierzu mit an einem Verschieberahmen angeordneten Sauggreifern ausgestattet, welche die Bandstücke endseitig unter Einwirken von Unterdruck ergreifen und im Formwerkzeug unter Einwirken von Überdruck ablegen, so daß die Faserstruktur des Formteils durch positioniertes Ablegen der Bandstücke in dem Formwerkzeug geschieht. Der Ablegevorgang kann von Abstreifern unterstützt werden, welche in Form eines in der Saugglocke des Sauggreifers verlagerbaren Kolbens ausgebildet sind.

Nachteilig ist insbesondere der für die Anordnung der Bandstücke gemäß der gewünschten Faserstruktur im Formwerkzeug erforderliche immense Zeitaufwand aufgrund der einzelnen Überführung einer Vielzahl von Bandstücken. Hierbei besteht einerseits die Gefahr einer Auskühlung der imprägnierten Fasern, welche - wie bereits erwähnt - zu einer verminderten Produktqualität führt, andererseits ist die Produktivität der Fertigungsanlage eher gering. Schließlich ist die aus einer Vielzahl von Bandstücken gebildete Faserstruktur des Formteils einer "echten" Endlosfaserstruktur, welche zusammenhängende, schlaufenförmige Faserstrukturen aufweist, hinsichtlich ihrer Festigkeit bzw. Zähigkeit unterlegen.

Der WO 99/52703 A1 sind eine Vielzahl von Verfahren und Vorrichtungen zur Herstellung endlosfaserverstärkter Polymer-Formteile entnehmbar. Während einerseits vorgesehen sein kann, daß die aus einer Heizeinrichtung kontinuierlich entnommenen, imprägnierten Endlosfasern mittels Führungsrollen unmittelbar in dem geöffneten Formwerkzeug abgelegt werden, ist unter anderem ein Verfahren und eine Vorrichtung nach dem Oberbegriff der Ansprüche 1 bzw. 12 beschrieben. Letzterer Vorgehensweise, welche eine Assemblierung der Endlosfaserstruktur außerhalb des Formwerkzeugs vorsieht, ist insbesondere im Hinblick auf die äußerst zeitaufwendige Ablage der Endlosfasern unmittelbar in dem Formwerkzeug der Vorzug zu geben. Dabei ist die Hilfsform von einem gegebenenfalls beheizbaren, an einem Transferrahmen gehaltenen, Einlegegitter gebildet, auf welchem die Endlosfasern in der jeweils gewünschten Orientierung abgelegt werden, wobei offen bleibt, ob dies mittels einer bewegten Austragsöffnung der Heizeinrichtung, in welcher die Endlosfasern unter Plastifizierung des Imprägniermaterials erwärmt werden, oder unter Relativbewegung des Gitters zu einer stationären Austragsöffnung der Heizeinrichtung geschehen soll. Während das Einlegegitter zum einen gemeinsam mit der hierauf abgelegten Endlosfaserstruktur im Formwerkzeug mit der die Polymermatrix des zu erzeugenden Formteils bildenden Preßmasse verpreßt werden kann, kann die Faserstruktur zum anderen auch von dem Einlegegitter in den Formraum der Formwerkzeugs überführt werden, so daß die aus dem Transferrahmen und dem Einlegegitter gebildete Einheit wiederverwendet werden kann. Indes bleibt wiederum offen, wie dies genau geschehen soll. Zwar wird vorgeschlagen, die auf dem Einlegegitter der Hilfsform abgelegte Endlosfaserstruktur derart abzukühlen, daß ein hinreichend formfester Zustand des Imprägniermaterials der Endlosfasern erreicht wird, und die abgekühlte Endlosfaserstruktur sodann in das Formwerkzeug zu transferieren und dort wieder aufzuheizen, doch kommt es unmittelbar beim Ablegen der Endlosfasern mit der schmelzflüssigen Imprägnierung zu einem Anhaften an dem Einlegegitter, so daß auch nach Abkühlung der Faserstruktur ein Lösen derselben von dem Gitter aufwendig, wenn nicht gar mit einem vertretbaren Zeitaufwand unmöglich ist. Schließlich wird das Imprägnier-Polymer mehrfach plastifiziert und wieder erstarrt, was im Hinblick auf eine mögliche thermische Schädigung des Polymers vermieden werden sollte.

Die EP 0 591 822 A1 beschreibt ein Verfahren und eine Vorrichtung zum Legen von Verstärkungs- oder Armierungsfäden für faserverstärkte Kunststoffe mittels einer Verlegeplatte mit einer Vielzahl an hierauf angeordneten Stiften, welche in die Verlegeplatte hinein und aus dieser heraus verfahrbar sind.

Schließlich ist es bekannt, anstelle von thermoplastischen Imprägnier-Polymeren duroplastische Polymere einzusetzen, um Endlosfasern anläßlich ihrer Verarbeitung zu Polymer-Formteilen zu imprägnieren. So beschreibt die FR 2 739 802 A1 eine Vorrichtung zur Herstellung eines endlosfaserverstärkten Polymer-Formteils, wobei die Endlosfasern von Spulen abgewickelt und mit einem duroplastischen Polymer imprägniert werden. Die imprägnierten Endlosfasern werden sodann auf Wickeldorne einer rotierenden Hilfsform aufgewickelt und von dieser in ein Formwerkzeug überführt, in welchem das Faserkonstrukt geformt wird. Was den Transfer der Fasern von der Hilfsform in das Formwerkzeug betrifft, so wird das Faserkonvolut von den Spindeln gelöst und werden die lokal mit den Fasern gebildeten Schlaufen gegebenenfalls mit Inserts versehen, wonach das Faserkonvolut in der Form plaziert wird. Die Überführung des aufgewickelten Faserkonvolutes in das Formwerkzeug erweist sich dabei als außerordentlich aufwendig und müssen die Wickeldorne komplett demontiert werden, um die Fasern freizugeben.

Der WO 01/64570 A1 ist ein weiteres Verfahren zur Herstellung eines endlosfaserverstärkten Polymer-Formteils zu entnehmen, wobei die Endlosfasern wiederum mit einem härtbaren, duroplastischen Polymer imprägniert und auf Spulen bzw. Wickeldorne eines Formwerkzeugs aufgewickelt werden. Bei dem Verfahren gemäß dieser Druckschrift verbleiben die Spulen in dem Faserkonvolut, so daß sie nach Aushärten des duroplastischen Imprägnier-Polymers in einem Ofen einen Teil des fertigen Formteils bilden.

Der Erfindung liegt die Aufgabe zugrunde, ein Verfahren und eine Vorrichtung der eingangs genannten vorzuschlagen, welche unter Vermeidung der vorgenannten Nachteile eine einfache und insbesondere schnelle Serienproduktion von mit Endlosfasern verstärkten Polymer-Formteilen mit hoher Productqualität ermöglichen.

In verfahrenstechnischer Hinsicht wird diese Aufgabe erfindungsgemäß einem Verfahren gemäß dem Anspruch 1 mit gelöst.

In vorrichtungstechnischer Hinsicht ist zur Lösung des der Erfindung zugrunde liegenden Problems eine Vorrichtung gemäß dem Anspruch 12 vorgesehen.

Eine Hilfsform einer solchen Vorrichtung, welche zur Aufnahme von mit wenigstens einem zumindest teilweise plastifizierten, in einen schmelzflüssigen Zustand überführten Polymer imprägnierten Endlosfasern zur Durchführung eines Verfahrens der vorgenannten Art geeignet ist, ist folglich zur Aufnahme der Endlosfasern im wesentlichen gemäß der gewünschten flächigen und/oder räumlichen Orientierung der Endlosfasern in dem Polymer-Formteil und zum Überführen und Ablegen der Endlosfasern in das bzw. in dem Formwerkzeug ausgebildet, wobei die Hilfsform mit Wickeldornen zur Aufnahme der Endlosfasern ausgestattet ist, wobei den Wickeldornen eine Abstreifeinrichtung zugeordnet ist, welche zum Abstreifen der auf die Wickeldorne aufgewickelten Endlosfasern ausgebildet ist, und wobei die Wickeldorne in der jeweils gewünschten Orientierung der Endlosfasern relativ zueinander verlagerbar sind.

Das erfindungsgemäße Verfahren ermöglicht eine außerordentlich schnelle Ausbildung der Endlosfaserstruktur gemäß der jeweils gewünschten Orientierung der Endlosfasern außerhalb des Formwerkzeugs, indem die Endlosfasern, deren plastifizierbares, in einen schmelzflüssigen Zustand überführbares Imprägnier-Polymer zuvor plastifiziert worden ist oder welche durch eine Schmelze des thermoplastischen Imprägnier-Polymers hindurchgeführt worden sind, auf die Wickeldorne der praktisch beliebig wiederverwendbaren Hilfsform aufgewickelt werden. Dies kann insbesondere dadurch geschehen, indem die Hilfsform von der z.B. in Form eines Roboters ausgebildeten Handhabungseinrichtung ergriffen wird und die Endlosfasern in der gewünschten Orientierung um die Wickeldorne herumgewickelt werden. Im Vergleich zum Stand der Technik ist die Erzeugung einer genau definierte Endlosfaserstruktur durch entsprechende Auswahl der Geometrie und/oder der Anordnung der Wickeldorne an der Hilfsform relativ zueinander, wobei die Endlosfasern zwischen den Wickeldornen gespannt werden können. So ist z.B. auch ohne weiteres die Erzeugung von Verstärkungsbereichen in dem Polymer-Formteil möglich, welche von einer etwa schlaufenförmigen Struktur der Endlosfasern gebildet sind, wobei solche Bereiche als hoch belastbare Befestigungsstellen des Formteils mit weiteren Bauteilen, z.B. Karosserieteilen von Kraftfahrzeugen, dienen können, welche durch die Endlosfaserschlaufen hindurch gebohrt bzw. gesteckt werden können. Dabei kann der Durchmesser eines oder mehrerer Wickeldorne der Hilfsform in der entsprechenden Größe gewählt und der Wickeldorn teilweise oder gänzlich, ein- oder mehrfach mit den Endlosfasern umwickelt wird.

Ferner können zur Erzeugung komplexerer Endlosfaserstrukturen, z.B. solcher, bei welchen die Endlosfasern mehrfach umgelenkt werden sollen, zumindest einige Wickeldorne gemäß der jeweils gewünschten Orientierung der Endlosfasern relativ zueinander verlagert werden. Die erfindungsgemäße Vorrichtung umfaßt zu diesem Zweck eine Hilfsform mit relativ zueinander verlagerbaren, z.B. auf Schienen geführten oder an Kolben-Zylindereinheiten angeordneten, Wickeldornen.

Desgleichen wird durch das erfindungsgemäße Verfahren eine äußerst einfache und schnelle Überführung der auf die Hilfsform aufgewickelten Faserstruktur in das Formwerkzeug sichergestellt, indem die Hilfsform oberhalb des offenen Formwerkzeugs angeordnet und die Endlosfaserstruktur durch Abstreifen von den Wickeldornen im Formwerkzeug abgelegt wird.

Hierzu ist vorzugsweise vorgesehen, daß die Abstreifeinrichtung der erfindungsgemäßen Vorrichtung eine den Wickeldorn zumindest teilweise umgreifende Hülse aufweist, wobei die Hülse und der Wickeldorn in Erstreckungsrichtung des Wickeldorns relativ zueinander verlagerbar sind. Somit werden die Hülse und der koaxial zu dieser angeordnete Wickeldorn relativ zueinander verlagert, wobei die dem freien Ende des Wickeldorns zugewandte Stirnseite der Hülse die Endlosfaserstruktur von dem Wickeldorn abstreift.

Vorzugsweise ist die Hülse in Erstreckungsrichtung des Wickeldorns bezüglich diesem verschiebbar, so daß der Abstreifvorgang durch Betätigung der Hülse geschieht. Dies kann beispielsweise mittels einer der Hülse zugeordneten Kolben-Zylindereinheit geschehen, welche z.B. hydraulisch, pneumatisch oder hydropneumatisch betätigbar sein kann.

Eine vorteilhafte Ausgestaltung sieht vor, daß die Hilfsform mittels der Handhabungseinrichtung derart bewegt wird, daß die Endlosfasern im wesentlichen spulenartig auf die Wickeldorne aufgewickelt werden. Dabei kann die von der Handhabungseinrichtung ergriffene Hilfsform z.B. derart im wesentlichen kreis- oder ellipsenförmig bewegt werden, daß die Endlosfasern auf die in der jeweils gewünschten Position angeordneten Wickeldorne aufgespult werden.

Auf diese Weise können die Endlosfasern zunächst einfach und schnell im wesentlichen spulenartig auf die Wickeldorne aufgewickelt und können zumindest einige Wickeldorne anschließend gemäß der jeweils gewünschten Orientierung der Endlosfasern relativ zueinander verlagert werden, wodurch die gewünschte Orientierung der Endlosfasern in dem zu erzeugenden Formteil erhalten wird.

Um während der Assemblierung der Endlosfaserstruktur auf der Hilfsform jegliche Abkühlung der Fasern und insbesondere deren plastifizierbaren, in einen schmelzflüssigen Zustand über führbaren thermoplastischen Imprägnier-Polymere zu verhindern, ist in Weiterbildung vorgesehen, daß die auf die Wickeldorne aufgewickelten Endlosfasern beheizt werden. Hierzu ist vorzugsweise vorgesehen, daß die Endlosfasern mittels Heißgas, insbesondere Heißluft, oder mittels elektromagnetischer Strahlung, insbesondere im Infrarot-Bereich, beheizt werden. Die Hilfsform der erfindungsgemäßen Vorrichtung ist zu diesem Zweck bevorzugt mit einer Heizeinrichtung ausgestattet, vorzugsweise in Form eines Heißgasgebläses, insbesondere eines Heißluftgebläses, und/oder in Form von elektromagnetischen Strahlern, insbesondere Infrarot-Strahlern, welche elektromagnetische Strahlung in einem Wellenlängenbereich zwischen etwa 800 nm und etwa 1000 µm aussenden.

Um während des Aufwickelns der Endlosfasern auf den Wickeldornen der Hilfsform eine Beeinträchtigung sowohl der Fasern als auch deren plastifizierbaren, in einen schmelzflüssigen Zustand überführbaren thermoplastischen Imprägnier-Polymere zu verhindern, wie sie infolge Reibung der mit dem plastifizierten Polymer beschichteten Endlosfasern an festen Umlenkstäben auftreten können, sieht eine bevorzugte Ausführung des erfindungsgemäßen Verfahrens vor, daß die Endlosfasern während des Aufwickelns auf die Wickeldorne der Hilfsform über wenigstens eine Übergaberolle geführt werden. Ferner weist (weisen) die Übergaberolle(n) aus Gründen einer geringen Reibung zweckmäßig eine glatte Oberfläche auf, welche beispielsweise poliert und/oder mit einem geeigneten Material, wie Keramik, Kunststoff, z.B. Polytetrafluorethylen (PTFE) oder dergleichen, beschichtet sein kann.

Des weiteren kann (können) die Übergaberolle(n) vorzugsweise beheizt werden, um eine Abfuhr von Wärme aus den Endlosfasern zu verhindern.

Schließlich ist es von Vorteil, wenn die Übergaberolle (n) gemäß der jeweiligen Erstreckungsrichtung der Endlosfasern um wenigstens eine Achse verschwenkt wird (werden), um die Übergaberolle entsprechend der jeweiligen Erstreckungsrichtung der Endlosfasern während des Aufwickeln auf die Wickeldorne der Hilfsform ausrichten zu können.

In vorrichtungstechnischer Hinsicht ist zu diesem Zweck vorgesehen, daß der Vorrichtung wenigstens eine, insbesondere beheizbare, Übergaberolle zugeordnet ist, welche zur Überführung der Endlosfasern auf die Wickeldorne der Hilfsform ausgebildet ist und vorzugsweise eine glatte Lauffläche aufweist. Aus den genannten Gründen ist (sind) die Übergaberolle(n) dabei in vorteilhafter Ausgestaltung um wenigstens eine Achse schwenkbar gelagert.

In Weiterbildung des erfindungsgemäßen Verfahrens ist vorgesehen, daß das Imprägnier-Polymer der Endlosfasern aus der Gruppe der thermoplastischen Elastomere (TPEs), insbesondere aus der Gruppe der thermoplastischen Polyolefinelastomere (TPO), gewählt wird. Auf diese Weise läßt sich dem endlosfaserverstärkten Polymer-Formteil eine gegenüber dem aus dem Stand der Technik bekannten Einsatz von thermoplastischen Imprägnier-Polymeren deutlich höhere Biegefestigkeit verleihen, da die Endlosfasern aus der Gruppe der TPEs bei einer hohen Zugfestigkeit auch bei hoher Belastung des Formteils im wesentlichen senkrecht zur Erstreckungsrichtung der Endlosfaserstruktur praktisch nicht versagen, sondern elastisch nachgeben. Das Formteil wird somit biegeweicher und knickt im Falle einer hohen Stoßbelastung bis zu einem gewissen Grad ein, ohne zu brechen. Dies ist insbesondere bei Karosserieteilen von Kraftfahrzeugen, z.B. Frontendträgern, von großer Bedeutung, da es im Falle einer Imprägnierung der Endlosfasern mit den TPEs im Kollisionsfall nicht zum Sprödbruch des Formteils kommt, wie es bei thermoplastischen Polymeren in der Regel der Fall ist, sondern das Formteil verändert lediglich unter Bildung einer die Fahrgastzelle des Kraftfahrzeugs schützenden Knautschzone mit einem verhältnismäßig großen Deformationsweg seine Form, wie es zur Adsorption von im Kollisionsfall auftretenden Stoßbelastungen erwünscht ist.

Das erfindungsgemäße Verfahren ermöglicht folglich die Herstellung eines endlosfaserverstärkten Polymer-Formteils, insbesondere zum Einsatz in der Automobilindustrie, welches in einer Polymermatrix eingebettete Endlosfasern aufweist, wobei die Endlosfasern mit wenigstens einem plastifizierbaren, in einen schmelzflüssigen Zustand überführbaren Polymer imprägniert sind. Das Imprägnier-Polymer kann dabei vorzugsweise wenigstens ein Polymer aus der Gruppe der thermoplastischen Elastomere (TPE), insbesondere aus der Gruppe der thermoplastischen Polyolefinelastomere (TPO), aufweisen.

Als im Hinblick auf eine hohe Zugfestigkeit und einwandfreie Biegefestigkeit unter Vermeidung eines Sprödbruches des Polymer-Formteils besonders geeignete Imprägnier-Polymere haben sich einerseits Polymere aus der Gruppe der. Ethylen-Propylen-Elastomere (EPR), insbesondere aus der Gruppe der Copolymere aus Ethylen und Propylen (EPM) und/oder der Terpolymere aus Ethylen, Propylen und wenigstens einem nicht konjugierten Dien (EPDM), insbesondere 1,4-Hexadien, Dicyclopentadien und/oder 5-Ethyliden-2-norbornen, erwiesen. Ferner weisen die genannten Polymere eine einwandfreie Kompatibilität zu anderen Polyolefinen, insbesondere Polypropylen, auf, so daß eine Verpressung von mit den genannten Imprägnier-Polymeren imprägnierten Endlosfasern in einem Formwerkzeug in Gegenwart einer Preßmasse auf polyolefinischer Basis problemlos möglich ist.

Des weiteren haben sich Polymere aus der Gruppe der Ethylen-Acrylat-Elastomere, insbesondere aus der Gruppe der Terpolymere aus Ethylen, Methylacrylat und wenigstens einer ungesättigten Carbonsäure, wie Acrylsäure, Maleinsäure oder dergleichen, als besonders vorteilhaft herausgestellt.

Selbstverständlich ist es grundsätzlich auch möglich, Polymermischungen bzw. Polymer-Blends als Imprägnier-Polymere für die Endlosfasern einzusetzen.

Nachstehend ist die Erfindung anhand von Ausführungsbeispielen unter Bezugnahme auf die Zeichnungen näher erläutert. Dabei zeigen:
- Fig. 1: eine schematische Ansicht einer Vorrichtung zur Herstellung von endlosfaserverstärkten Polymer-Formteilen;
- Fig. 2: eine schematische Detailansicht einer Übergaberolle zur Überführung der erwärmten Endlosfasern an die Hilfsform;
- Fig. 3: eine schematische Draufsicht auf die Hilfsform der Vorrichtung gemäß Fig. 1 mit relativ zueinander verlagerbaren Wickeldornen von oben mit unterschiedlichen Anordnungen der Wickeldorne;
- Fig. 4: eine perspektivische Ansicht einer anderen Ausführungsform einer Hilfsform;
- Fig. 5: eine perspektivische Ansicht eines Wickeldorns der Hilfsform gemäß Fig. 5; und
- Fig. 6: eine teilweise geschnitten dargestellte perspektivische Ansicht eines endlosfaserverstärkten Polymer-Formteils.

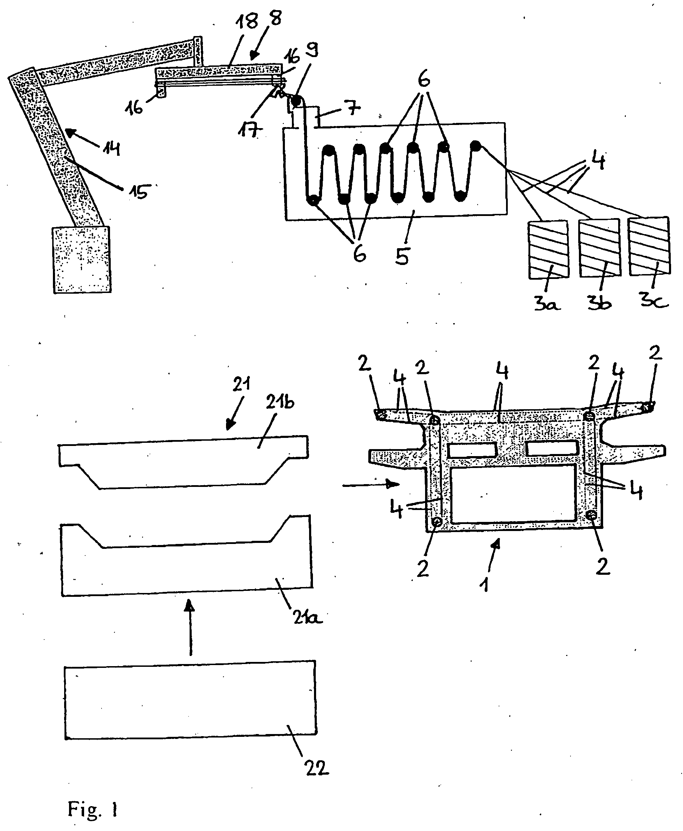

In Fig. 1 ist der schematische Aufbau einer Vorrichtung zur Herstellung von endlosfaserverstärkten Polymer-Formteilen 1 in Form von Frontendträgern von Kraftfahrzeugen dargestellt. Derartige Frontendträger dienen als vorderer Querträger der Karosserie des Kraftfahrzeugs und zum Festlegen der bezüglich der Erstreckungsebene des Frontendträgers etwa senkrecht angeordneten Längsträger des Chassis; letztere sind mit dem Bezugszeichen 2 angedeutet. Ein solcher Frontendträger eines Kraftfahrzeug muß im Kollisionsfall die Längsträger 2 zusammenhalten, so daß diese unter Bildung einer Knautschzone nach innen gefaltet werden, ohne den Unfallgegner-zu gefährden. Der Frontendträger soll folglich zwar deformierbar sein, muß aber eine sehr hohe Zugfestigkeit aufweisen und darf im Falle einer Kollision insbesondere nicht brechen.

Die Vorrichtung umfaßt beim vorliegenden Ausführungsbeispiel mehrere Spulen 3a, 3b, 3c mit auf diesen aufgewickelten Endlosfasern 4. Die Endlosfasern 4 sind z.B. von Glasfasern gebildet, welche mit einem thermoplastischen Elastomer (TPE), z.B. einem thermoplastischen Polyolefinelastomer (TPO) vorimprägniert sind.

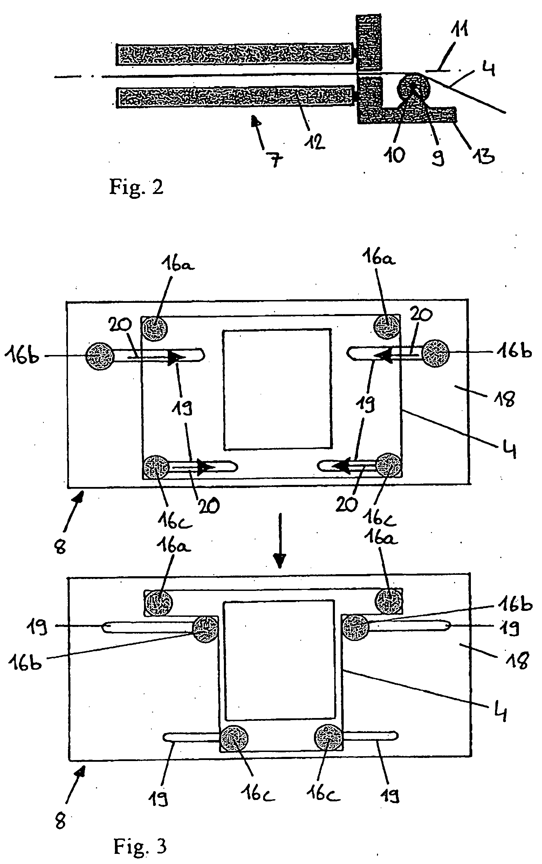

Von den Spulen 3a, 3b, 3c sind die Endlosfasern 4 einer Heizeinrichtung 5 zuführbar, um das Imprägnier-Polymer der Endlosfasern 4 anläßlich ihrer Verarbeitung in einen plastifizierten Zustand zu überführen. Innerhalb der Heizkammer der Heizeinrichtung 5 sind die Endlosfasern 4 über mehrere beheizte und gegebenenfalls angetriebene Umlenkrollen 6 geführt, so daß sich ein verarbeitungsfähiger Endlosfaserstrang von z.B. wenigstens 5 m ergibt. Wie insbesondere aus Fig. 2 ersichtlich, weist die Heizeinrichtung 5 an ihrer Ausgabestelle 7 zur Überführung der Endlosfasern 4 an eine Hilfsform 8 (Fig. 1) eine beheizte Übergaberolle 9 auf, welche einerseits um ihre Mittelachse 10 drehbar, andererseits um eine hierzu senkrechte Achse 11 verschwenkbar ist. Dies ist beim gezeigten Ausführungsbeispiel dadurch gewährleistet, indem die Ausgabestelle 7, welche die heißen. Endlosfasern 4 aufnimmt, von einem um seine Längsmittelachse 11 drehbaren Austragsrohr 12 gebildet ist, an dessen der Heizeinrichtung 5 (Fig. 1) abgewandten Stirnseite ein etwa L-förmiger Träger 13 festgelegt, an dessen einem, zur Erstreckungsrichtung des Austragsrohres 12 im wesentlichen parallel angeordneten Schenkel die Übergaberolle 9 derart gelagert ist, daß die Längsmittelachse 11 des Austragsrohres 12 stets etwa tangential zu der Übergaberolle 9 ausgerichtet ist. Die Übergaberolle 9 besitzt vorzugsweise eine glatte Lauffläche und ist hierzu beispielsweise poliert, um die heißen Endlosfasern 4 bzw. deren plastifiziertes Imprägnier-Polymer möglichst wenig Reibung auszusetzen.

Alternativ kann anstelle der Heizeinrichtung 3 eine Imprägniereinrichtung (nicht dargestellt) vorgesehen sein, welche rohe Endlosfasern mit einem plastifizierten Polymer, insbesondere einem thermoplastischen Elastomer, imprägniert, indem die Endlosfasern z.B. durch eine Schmelze des Imprägnier-Polymers hindurch geführt werden. An der Ausgabestelle einer solchen Imprägniereinrichtung kann ebenfalls eine Übergaberolle vorgesehen sein, wie sie in Fig. 2 exemplarisch wiedergegeben ist.

Wie der Fig. 1 weiterhin zu entnehmen ist, ist der Hilfsform 8, welcher die Endlosfasern 4 von der Ausgabestelle 7 des Heizeinrichtung 5 über die Übergaberolle 9 zuführbar sind, eine Handhabungseinrichtung 14 in Form eines mehrachsigen Roboters 15 zugeordnet, welcher die Hilfsform 8 ergreift und sie derart bewegt, daß die Endlosfasern 4 z.B. etwa spulenartig um Wickeldorne 16 der Hilfsform 8 herum gewickelt werden. Dabei kann die Heizeinrichtung 5 mit der Ausgabestelle 7 insbesondere stationär sein, während die Hilfsform 8 mittels der Handhabungseinrichtung 14 relativ zu dieser bewegbar ist. Die Handhabungseinrichtung 14 und/oder die Hilfsform 8 weist/weisen ferner eine Halte-/ Schneideinrichtung 17 auf, um den Endlosfaserstrang 4 zu ergreifen und ihn - nach dem Aufwickeln auf die Wickeldorne 16 der Hilfsform 8 - ablängen zu können.

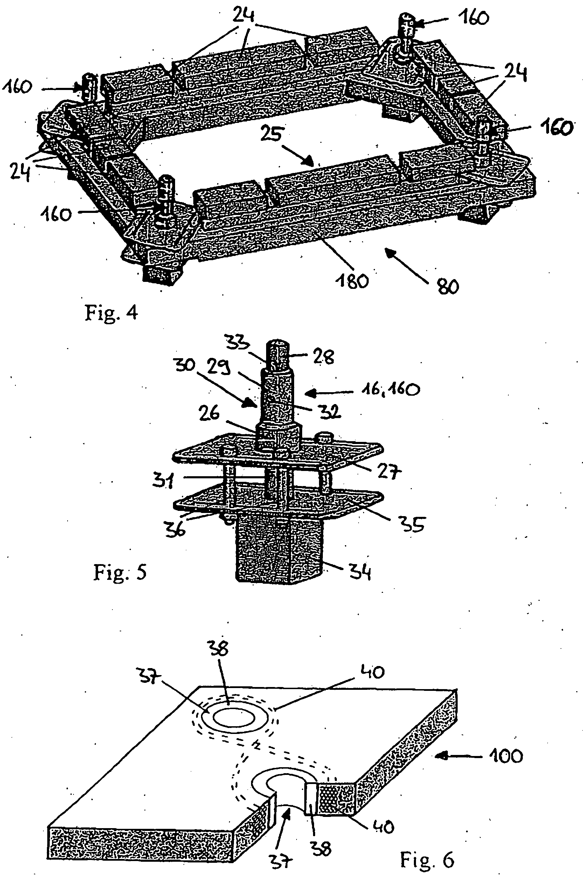

Wie insbesondere aus Fig. 3 ersichtlich, weist die Hilfsform 8, welche zur Assemblierung des imprägnierten Endlosfaserstrangs 4 außerhalb des Formwerkzeugs und zum Ablegen der assemblierten Endlosfaserstruktur in der gewünschten Orientierung der Endlosfasern in dem Formwerkzeug ausgebildet ist, einen Tragrahmen 18 auf, welcher beim vorliegenden Ausführungsbeispiel mit sechs Wickeldornen 16a, 16b, 16c ausgestattet ist. Die in Fig. 2 oben dargestellt Situation entspricht der Anordnung der Wickeldorne 16a, 16b, 16c während des etwa spulenartigen Aufwickelns der Endlosfasern 4 über die die Eckpunkte eines Rechteckes bildenden Wickeldorne 16a, 16c. Die außerhalb dieses, von den aufgewickelten Endlosfasern 4 gebildeten Quadrates angeordneten Wikkeldorne 16b sind vorzugsweise auf ein Niveau unterhalb der die Faserstruktur 4 tragenden Wickeldorne 16a, 16c absenkbar. Die Wickeldorne 16a, 16b, 16c sind ferner relativ zueinander verlagerbar, was bei dem gezeigten Ausführungsbeispiel dadurch gewährleistet ist, daß zumindest die Wickeldorne 16b, 16c auf Führungen 19, z.B. in Form von Schienen, Langlöchern oder dergleichen, geführt und mit einem entsprechenden Antriebsmechanismus (nicht dargestellt) ausgestattet sind. Auf diese Weise sind die Wickeldorne 16b, 16c entlang der Führungen 19 von der in Fig. 2 oben in die in Fig. 2 unten dargestellte Anordnung überführbar, welche der endgültigen Orientierung der Endlosfaserstruktur in dem Formteil 1 (Fig. 1) entspricht. Die Wickeldorne 16a, 16b, 16c sind ihrerseits jeweils mit einer Abstreifeinrichtung zum Abstreifen der auf die Wickeldorne 16a, 16b, 16c aufgewickelten Endlosfasern 4 und zum Ablegen derselben in einem Formwerkzeug ausgestattet (in Fig. 3 nicht wiedergegeben), wie sie weiter unten unter Bezugnahme auf Fig. 5 im einzelnen erläutert ist. Die Hilfsform 8 ist ferner vorzugsweise mit einer Heizeinrichtung ausgestattet (in Fig. 3 nicht dargestellt), wie sie weiter unten unter Bezugnahme auf Fig. 4 näher erläutert ist.

Wie weiterhin aus Fig. 1 ersichtlich, ist der Handhabungseinrichtung 14 mit der Hilfsform 8 ein Formwerkzeug 21 mit einer unteren Werkzeughälfte 21a und einer oberen Werkzeughälfte 21 b zugeordnet, wobei die auf den Wickeldornen 16 der Hilfsform 8 aufgewickelten Endlosfasern 4 in der vorgesehenen Orientierung (vgl. Fig. 3 unten) in der unteren Werkzeughälfte 21a des offenen Formwerkzeugs 21 ablegbar sind, indem sie von den Wickeldornen 15 abgestreift werden.

Dem Formwerkzeug 21 ist ferner ein Materialspeicher 22 zugeordnet, aus welchem zusätzliche plastifizierbare Polymere in das Formwerkzeug 21 eingebracht werden können, welche die Polymermatrix des Formteils 1 bilden und insbesondere mit dem thermoplastischen Elastomer des Imprägniermaterials der Endlosfasern kompatibel sind. Der Materialspeicher 22 kann z.B. von einem Extruder, einer Spritzgießmaschine oder dergleichen gebildet sein, sofern das Polymer in Form einer Preßmasse bzw. Schmelze in das Formwerkzeug 21 eingebracht werden soll. Das Polymer kann beispielsweise ein langfaserverstärkter Thermoplast (LFT) auf der Basis von glasfaserverstärktem Polypropylen sein. Alternativ kann der Materialspeicher 22 auch von einem Vorratsbehälter mit einer volumetrischen oder gravimetrischen Dosiereinheit gebildet sein (nicht gezeigt), sofern das Polymer in Granulatform in das Formwerkzeug 21 eingebracht werden soll.

Das dem Formwerkzeug 21 entnommene, endlosfaserverstärkte Polymer-Formteil 1 in Form eines Frontendträgers für Kraftfahrzeuge weist eine gezielte Orientierung der Endlosfasern 4 auf, welche sich zwischen den vorgesehenen Befestigungsstellen 2 des Frontendträgers mit den Längsträgern des Chassis des Kraftfahrzeugs erstrecken und diese schlaufenförmig umschlingen, so daß im Kollisionsfall die Längsträger von dem Frontendträger zusammengehalten werden. Dabei bewahrt das Imprägnier-Polymer der Endlosfasern 4 in Form eines thermoplastischen Elastomers den Frontendträger vor Sprödbruch entlang der Erstreckungsrichtung(en) der Endlosfaserstruktur 4, indem diese elastisch nachgeben und der Frontendträger lediglich unter Bildung einer Knautschzone deformiert wird.

Fig. 4 zeigt eine alternative Ausgestaltung einer Hilfsform 80 mit einem Tragrahmen 180, welcher mit vier stationär an diesem angeordneten Wickeldornen 160 ausgestattet ist. Am Umfang des Tragrahmens 180 jeweils zwischen den Wickeldornen 160 sind Infrarot-Strahler 24 einer Heizeinrichtung 25 vorgesehen, welche auf die Wickeldorne 160 aufgewickelte, imprägnierte Endlosfasern (in Fig. 4 nicht dargestellt) mit elektromagnetischer Strahlung mit einer Wellenlänge im Infrarot-Bereich bestrahlen und eine Abkühlung der auf der Hilfsform 80 aufgewickelten Endlosfasern somit zuverlässig verhindern, so daß sich das Imprägnier-Polymer stets in einem plastifizierten zustand befindet. Anstelle der Infrarot-Strahler 24 kann die Heizeinrichtung 25 z.B. auch ein Heißluftgebläse (nicht wiedergegeben) aufweisen.

In Fig. 5 ist eine Detailansicht eines Wickeldorns 160 der Hilfsform 180 gemäß Fig. 4 wiedergegeben, wobei die Wickeldorne 16 der Hilfsform gemäß Fig. 3 entsprechend ausgebildet sein können. Der Wickeldorn 16, 160 ist beim vorliegenden Ausführungsbeispiel über einen Ansatz 26 an einer Halteplatte 27 festgelegt, wobei das freie Ende 28 des Wickeldorns 16, 160 zur Aufnahme der Endlosfasern (in Fig. 5 nicht dargestellt) dient. Eine zwischen dem Ansatz 26 und dem freien Ende 28 des Wickeldorns 16, 160 in Erstreckungsrichtung des Wickeldorns 16, 160 verschiebbare Hülse 29 dient als Abstreifeinrichtung 30 zum Ablegen des auf dem Wickeldorn 16, 160 aufgewickelten Endlosfaserstrangs in einem Formwerkzeug 21 (vgl. z.B. Fig. 1). Zur relativen Verlagerung der Hülse 29 bezüglich des Wickeldorns 16, 160 ist die Hülse 30 an der Kolbenstange 31 einer Kolben-Zylindereinheit 34 festgelegt, wobei die Kolbenstange 31 beim gezeigten Ausführungsbeispiel im Innern des Wickeldorns 16, 160 geführt und über ein stiftförmiges Verbindungselement 32, welches ein in Erstreckungsrichtung des Wickeldorns 16, 160 angeordnetes Langloch 33 des Wickeldorns 16, 160 radial durchsetzt, mit der Hülse 29 verbunden ist. Die Kolben-Zylindereinheit 34 ist an einer weiteren Halteplatte 35 festgelegt, welche mittels Distanzschrauben 36 unter einem vorgegebenen Abstand von der den Wickeldorn 16, 160 tragenden Halteplatte 27 angeordnet ist. Sofern die Wickeldorne 16 relativ zueinander verlagerbar sind (vgl. Fig. 3), so kann vorzugsweise die gesamte, in Fig. 5 wiedergegebene Einheit entlang der Führungen 19 (Fig. 3) verlagerbar sein.

In Fig. 6 ist schließlich ein anderes Ausführungsbeispiel eines endlosfaserverstärkten Polymer-Formteils 100 dargestellt, welches z.B. als tragendes Profil für Bauelemente vorgesehen ist. Das Formteil 100 gemäß Fig. 6 weist eine Endlosfaserverstärkung 40 auf, welche sich schlaufenförmig - beim vorliegenden Ausführungsbeispiel in Form einer "8" - um zwei Befestigungspunkte 37 des Formteils 100 in Form von Durchbrüchen erstreckt und diese verstärkt, um dort äußere Kräfte in das Formteil 100 einleiten zu können. Die Befestigungspunkte 37 sind ferner mit hülsenförmigen Einlegeteilen 38 versehen, welche z.B. anläßlich der Herstellung mit dem Polymermaterial des Formteils 100 umspritzt bzw. verpreßt worden sind, indem sie in das Formwerkzeug eingelegt worden sind und die Endlosfaserstruktur 38 von einer Hilfsform anschließend in dem Formwerkzeug abgelegt worden ist. Dabei ist der Durchmesser der Wickeldorne der Hilfsform (nicht dargestellt) derart gewählt worden, daß er hinreichend größer ist als der Durchmesser der Einlegeteile 38, um die Endlosfaserstruktur 40 in der gewünschten Orientierung von der Hilfsform in das Formwerkzeug überführen zu können.

Nachstehend ist das Verfahren zur Herstellung des endlosfaserverstärkten Polymer-Formteils 1 in Form eines Frontendträgers für Kraftfahrzeugs unter Bezugnahme auf die Zeichnungen im einzelnen erläutert:
Die mit dem thermoplastischen Elastomer vorimprägnierten Endlosfasern 4 werden unter Bildung eine Endlosfaserstrangs von den Spulen 3a, 3b, 3c abgewickelt und in der Heizeinrichtung 5 auf eine Temperatur erwärmt, welche zumindest der Erweichungstemperatur des Imprägnier-Polymers entspricht. Die aus der Heizeinrichtung 5 über die Übergaberolle 9 der Abgabestelle 7 (vgl. Fig. 2) herausgeführten, erwärmten Endlosfasern 4 werden sodann von der Halte-/ Schneideinrichtung 17 ergriffen und um die Wickeldorne 16a, 16c der Hilfsform 8 (vgl. Fig. 3, oben) spulenartig herumgewickelt, indem die Handhabungseinrichtung 14, welche die Hilfsform 8 trägt, ein entsprechendes Bewegungsprogramm abarbeitet (Fig. 1). Sodann werden die aufgewickelten Endlosfasern 4 mittels der Halte-/Schneideinrichtung 17 durchtrennt. Um die Endlosfasern 4 in der gewünschten Orientierung der Faserstruktur des Formteils 1 auszurichten, werden die Wickeldorne 16b, 16c aus ihrer in Fig. 3 oben dargestellten Position in ihre in Fig. 3 unten gezeigte Position entlang der Führungen 19 verlagert. Während des gesamten Aufwickel- bzw. Orientierungsvorgangs werden die auf die Wickeldorne 16 der Hilfsform 18 aufgewickelten Endlosfasern 4 mittels der Heizeinrichtung 24 (Fig. 4) auf einer Temperatur gehalten, welche zumindest der Erweichungstemperatur des Imprägnier-Polymers der Endlosfasern 4 entspricht. Anschließend wird die Endlosfaserstruktur 4 mittels der Hilfsform 8 in die untere Werkzeughälfte 21a des offenen, vorgeheizten Formwerkzeugs 21 abgelegt, indem die Hilfsform 8 von der Handhabungseinrichtung 14 oberhalb der unteren Werkzeughälfte 21a positioniert wird und die Hülsen 29 der Abstreifeinrichtung 30 (Fig. 5) die Faserstruktur 4 von den Wickeldornen abstreifen. Die erforderliche Menge an LFT-Plastifikat wird aus dem Materialspeicher 22 in das Formwerkzeug 21 überführt, letzteres wird geschlossen und die Endlosfaserstruktur 4 wird im Formraum des Formwerkzeugs 21 mit dem LFT-Plastifikat verpreßt. Schließlich wird das Formwerkzeug 21 abgekühlt und das fertige Formteil 1 dem Formwerkzeug 21 entnommen. Alternativ kann das fertige Formteil 1 insbesondere auch in dem im wesentlichen isotherm temperierten Formwerkzeug 21 abgekühlt werden, was den Vorteil einer kürzeren Zykluszeit mit sich bringt.

## Patentansprüche

1. Verfahren zur Herstellung eines mit Endlosfasern (4, 40) verstärkten Polymer-Formteils (1, 100), indem die mit wenigstens einem zumindest teilweise plastifizierten, in einen schmelzflüssigen Zustand überführten Polymer imprägnierten Endlosfasern (4, 40) mittels einer Handhabungseinrichtung (14) derart auf einer Hilfsform (8, 80) angeordnet werden, daß die flächige und/oder räumliche Orientierung der Endlosfasern (4, 40) im wesentlichen der in dem Polymer-Formteil (1, 100) vorgesehenen Orientierung der Endlosfasern (4, 40) entspricht, wobei die orientierten Endlosfasern (4, 40) mittels der Hilfsform (8, 80) anschließend in wenigstens ein zweiteiliges, offenes Formwerkzeug (21) überführt und dort abgelegt werden, wonach das Formwerkzeug (21) geschlossen wird und die imprägnierten, orientierten Endlosfasern (4, 40) allein oder unter Zugabe wenigstens eines weiteren, zumindest einen Teil der Polymermatrix des zu erzeugenden Polymer-Formteils (1, 100) bildenden, plastifizierbaren, in einen schmelzflüssigen Zustand überführbaren Polymers unter Bildung des endlosfaserverstärkten Polymer-Formteils (1, 100) verpreßt werden, wobei das Polymer-Formteil (1, 100) anschließend abgekühlt und dem Formwerkzeug (21) entnommen wird, **dadurch gekennzeichnet, daß** die Endlosfasern (4, 40) auf Wickeldorne (16, 160) der Hilfsform (8, 80) aufgewickelt werden, daß zumindest einige (16b, 16c) der Wickeldorne (16a, 16b, 16c) gemäß der jeweils gewünschten Orientierung der Endlosfasern (4) relativ zueinander verlagert werden, und daß die auf den Wickeldornen (16, 160) der Hilfsform (8, 80) aufgewickelten, orientierten Endlosfasern (4, 40) anschließend durch Abstreifen von den Wickeldornen (16, 160) in das offene Formwerkzeug (21) überführt werden.

2. Verfahren nach Anspruch 1, **dadurch gekennzeichnet, daß** die Hilfsform (8, 80) mittels der Handhabungseinrichtung (14) derart bewegt wird, daß die Endlosfasern (4) im wesentlichen spulenartig auf die Wickeldorne (16, 160) aufgewickelt werden.

3. Verfahren nach Anspruch 1 oder 2, **dadurch gekennzeichnet, daß** die Endlosfasern (4) zunächst im wesentlichen spulenartig auf die Wickeldorne (16) aufgewickelt und zumindest einige (16b, 16c) der Wickeldorne (16a, 16b, 16c) anschließend gemäß der jeweils gewünschten Orientierung der Endlosfasern (4) relativ zueinander verlagert werden.

4. Verfahren nach einem der Ansprüche 1 bis 3, **dadurch gekennzeichnet, daß** die auf die Wickeldorne (16, 160) aufgewickelten Endlosfasern (4, 40) beheizt werden.

5. Verfahren nach Anspruch 4, **dadurch gekennzeichnet, daß** die Endlosfasern (4, 40) mittels Heißgas, insbesondere Heißluft, oder mittels elektromagnetischer Strahlung, insbesondere im Infrarot-Bereich, beheizt werden.

6. Verfahren nach einem der Ansprüche 1 bis 5, **dadurch gekennzeichnet, daß** die Endlosfasern (4, 40) während des Aufwickelns auf die Wickeldorne (16, 160) der Hilfsform (8, 80) über wenigstens eine Übergaberolle (9) geführt werden.

7. Verfahren nach Anspruch 6, **dadurch gekennzeichnet, daß** die Übergaberolle(n) (9) beheizt wird (werden).

8. Verfahren nach Anspruch 6 oder 7, **dadurch gekennzeichnet, daß** die Übergaberolle(n) (9) gemäß der jeweiligen Erstreckungsrichtung der Endlosfasern (4, 40) um wenigstens eine Achse (11) verschwenkt wird (werden).

9. Verfahren nach einem der Ansprüche 1 bis 8, **dadurch gekennzeichnet, daß** das Imprägnier-Polymer der Endlosfasern (4, 40) aus der Gruppe der thermoplastischen Elastomere, insbesondere aus der Gruppe der thermoplastischen Polyolefinelastomere, gewählt wird.

10. Verfahren nach Anspruch 9, **dadurch gekennzeichnet, daß** das Imprägnier-Polymer der Endlosfasern (4, 40) aus der Gruppe der Ethylen-Propylen-Elastomere, insbesondere aus der Gruppe der Copolymere aus Ethylen und Propylen und/oder der Terpolymere aus Ethylen, Propylen und wenigstens einem nicht konjugierten Dien, insbesondere 1,4-Hexadien, Dicyclopentadien und/oder 5-Ethyliden-2-norbornen, gewählt wird.

11. Verfahren nach Anspruch 9, **dadurch gekennzeichnet, daß** das Imprägnier-Polymer der Endlosfasern (4, 40) aus der Gruppe der Ethylen-Acrylat-Elastomere, insbesondere aus der Gruppe der Terpolymere aus Ethylen, Methylacrylat und wenigstens einer ungesättigten Carbonsäure, wie Acrylsäure, Maleinsäure oder dergleichen, gewählt wird.

12. Vorrichtung, welche zur Durchführung eines Verfahrens zur Herstellung eines mit Endlosfasern verstärkten Polymer-Formteils (1, 100) nach einem der Ansprüche 1 bis 11 geeignet ist, mit einer Handhabungseinrichtung (14), welche zum Anordnen von mit wenigstens einem zumindest teilweise plastifizierten, in einen schmelzflüssigen Zustand überführten Polymer imprägnierten Endlosfasern (4, 40) auf einer Hilfsform (8, 80) ausgebildet ist, wobei die Hilfsform (8, 80) zur Aufnahme der Endlosfasern (4, 40) im wesentlichen gemäß der gewünschten flächigen und/oder räumlichen Orientierung der Endlosfasern (4, 40) in dem Polymer-Formteil (1, 100) ausgebildet ist, und mit wenigstens einem, zumindest zweiteiligen Formwerkzeug (21), in welches die Endlosfasern (4, 40) mittels der Hilfsform (8, 80) überführbar und dort ablegbar sind, **dadurch gekennzeichnet, daß** die Hilfsform (8, 80) mit Wickeldornen (16, 160) zur Aufnahme der Endlosfasern (4, 40) ausgestattet ist, wobei den Wickeldornen (16, 160) eine Abstreifeinrichtung (30) zugeordnet ist, welche zum Abstreifen der auf die Wickeldorne (16, 160) aufgewickelten Endlosfasern (4, 40) ausgebildet ist, und wobei die Wickeldorne (16a, 16b, 16c) in der jeweils gewünschten Orientierung der Endlosfasern (4, 40) relativ zueinander verlagerbar sind.

13. Vorrichtung nach Anspruch 12, **dadurch gekennzeichnet, daß** die Abstreifeinrichtung (30) eine den Wickeldorn (16, 160) zumindest teilweise umgreifende Hülse (29) aufweist, wobei die Hülse (19) und der Wickeldorn (16, 160) in Erstreckungsrichtung des Wickeldorns (16, 160) relativ zueinander verlagerbar sind.

14. Vorrichtung nach Anspruch 13, **dadurch gekennzeichnet, daß** die Hülse (29) in Erstreckungsrichtung des Wickeldorns (16, 160) verschiebbar ist.

15. Vorrichtung nach Anspruch 14, **dadurch gekennzeichnet, daß** der Hülse (29) eine Kolben-Zylindereinheit (34) zugeordnet ist.

16. Vorrichtung nach einem der Ansprüche 12 bis 15, **dadurch gekennzeichnet, daß** die Hilfsform (8, 80) mit einer Heizeinrichtung (25) ausgestattet ist.

17. Vorrichtung nach Anspruch 16, **dadurch gekennzeichnet, daß** die Heizeinrichtung (25) von wenigstens einem Heißgasgebläse, insbesondere von einem Heißluftgebläse, gebildet ist.

18. Vorrichtung nach Anspruch 16, **dadurch gekennzeichnet, daß** die Heizeinrichtung (25) von wenigstens einem elektromagnetischen Strahler, insbesondere einem Infrarot-Strahler (24), gebildet ist.

19. Vorrichtung nach einem der Ansprüche 12 bis 18, **dadurch gekennzeichnet, daß** ihr wenigstens eine Übergaberolle (9) zugeordnet ist, welche zur Überführung der Endlosfasern (4, 40) auf die Wickeldorne (16, 160) der Hilfsform (8, 80) ausgebildet ist.

20. Vorrichtung nach Anspruch 19, **dadurch gekennzeichnet, daß** die Übergaberolle(n) (9) um wenigstens eine Achse (11) schwenkbar gelagert ist (sind).

## Claims

1. Method for producing a moulded polymer part (1, 100) reinforced with endless fibres (4, 40), in which method the endless fibres (4, 40) being impregnated with at least one polymer which is at least partially plasticized and is converted to a molten state are disposed by means of a handling installation (14) on an auxiliary mould (8, 80) in such a manner that the two-dimensional and/or three-dimensional orientation of the endless fibres (4, 40) substantially corresponds to the orientation of the endless fibres (4, 40) that is provided in the moulded polymer part (1, 100), wherein the oriented endless fibres (4, 40) by means of the auxiliary mould (8, 80) subsequently are transferred to at least one two-part open moulding tool (21) and are deposited there, upon which the moulding tool (21) is closed and the impregnated oriented endless fibres (4, 40) are compressed solely or with the addition of at least one further plasticizeable polymer which forms at least part of the polymer matrix of the moulded polymer part (1, 100) to be produced and is convertible to a molten state, while forming the endless-fibre reinforced moulded polymer part (1, 100), wherein the moulded polymer part (1, 100) is subsequently cooled and removed from the moulding tool (21), **characterized in that** the endless fibres (4, 40) are wound onto mandrels (16, 160) of the auxiliary mould (8, 80), **in that** at least some (16b, 16c) of the mandrels (16a, 16b, 16c) are mutually dislocated according to the respectively desired orientation of the endless fibres (4), and **in that** the oriented endless fibres (4, 40) which are wound onto the mandrels (16, 160) of the auxiliary mould (8, 80) subsequently by doffing from the mandrels (16, 160) are transferred into the open moulding tool (21).

2. Method according to Claim 1, **characterized in that** the auxiliary mould (8, 80) by means of the handling installation (14) is moved in such a manner that the endless fibres (4) are wound onto the mandrels (16, 160) substantially in the manner of wound packages.

3. Method according to Claim 1 or 2, **characterized in that** the endless fibres (4) are initially wound onto the mandrels (16) substantially in the manner of wound packages and at least some (16b, 16c) of the mandrels (16a, 16b, 16c) are subsequently mutually dislocated according to the respectively desired orientation of the endless fibres (4).

4. Method according to one of Claims 1 to 3, **characterized in that** the endless fibres (4, 40) which are wound onto the mandrels (16, 160) are heated.

5. Method according to Claim 4, **characterized in that** the endless fibres (4, 40) are heated by means of hot gas, in particular hot air, or by means of electromagnetic radiation, in particular in the infrared range.

6. Method according to one of Claims 1 to 5, **characterized in that** the endless fibres (4, 40) during winding onto the mandrels (16, 160) of the auxiliary mould (8, 80) are guided over at least one transfer roller (9).

7. Method according to Claim 6, **characterized in that** the transfer roller(s) (9) is/are heated.

8. Method according to Claim 6 or 7, **characterized in that** the transfer roller(s) (9) is/are pivoted about at least one axis (11), according to the respective direction of extent of the endless fibres (4, 40).

9. Method according to one of Claims 1 to 8, **characterized in that** the impregnation polymer of the endless fibres (4, 40) is selected from the group of thermoplastic elastomers, in particular from the group of thermoplastic polyolefin elastomers.

10. Method according to Claim 9, **characterized in that** the impregnation polymer of the endless fibres (4, 40) is selected from the group of ethylene-propylene elastomers, in particular from the group of copolymers from ethylene and propylene and/or of terpolymers from ethylene, propylene, and at least one non-conjugate diene, in particular 1,4-hexadiene, dicyclopentadiene, and/or 5-ethylidene-2-norbornene.

11. Method according to Claim 9, **characterized in that** the impregnation polymer of the endless fibres (4, 40) is selected from the group of ethylene-acrylate elastomers, in particular from the group of terpolymers from ethylene, methyl acrylate, and at least one non-saturated carboxylic acid, such as acrylic acid, maleic acid, or the like.

12. Apparatus which is suitable for carrying out a method for producing a moulded polymer part (1, 100) reinforced with endless fibres, according to one of Claims 1 to 11, having a handling installation (14) which is configured for arranging endless fibres (4, 40) being impregnated with at least one polymer which is at least partially plasticized and is converted to a molten state on an auxiliary mould (8, 80), wherein the auxiliary mould (8, 80) is configured for receiving the endless fibres (4, 40) substantially according to the desired two-dimensional and/or three-dimensional orientation of the endless fibres (4, 40) in the moulded polymer part (1, 100), and having at least one at least two-part moulding tool (21) into which the endless fibres (4, 40) by means of the auxiliary mould (8 80) are transferable and are depositable therein, **characterized in that** the auxiliary mould (8, 80) is equipped with mandrels (16, 160) for receiving the endless fibres (4, 40), wherein the mandrels (16, 160) are assigned a doffing installation (30) which is configured for doffing the endless fibres (4, 40) wound onto the mandrels (16, 160), and wherein the mandrels (16a, 16b, 16c) are mutually dislocatable in the respectively desired orientation of the endless fibres (4, 40).

13. Apparatus according to Claim 12, **characterized in that** the doffing installation (30) has a sleeve (29) which at least partially encompasses the mandrel (16, 160), wherein the sleeve (19) and the mandrel (16, 160) are mutually dislocatable in the direction of extent of the mandrel (16, 160).

14. Apparatus according to Claim 13, **characterized in that** the sleeve (29) is displaceable in the direction of extent of the mandrel (16, 160).

15. Apparatus according to Claim 14, **characterized in that** the sleeve (29) is assigned a piston-and-cylinder unit (34).

16. Apparatus according to one of Claims 12 to 15, **characterized in that** the auxiliary mould (8, 80) is equipped with a heating installation (25).

17. Apparatus according to Claim 16, **characterized in that** the heating installation (25) is formed by at least one hot-gas blower, in particular by a hot-air blower.

18. Apparatus according to Claim 16, **characterized in that** the heating installation (25) is formed by at least one electromagnetic radiator, in particular by an infrared radiator (24).

19. Apparatus according to one of Claims 12 to 18, **characterized in that** said apparatus is assigned at least one transfer roller (9) which is configured for transferring the endless fibres (4, 40) onto the mandrels (16, 160) of the auxiliary mould (8, 80).

20. Apparatus according to Claim 19, **characterized in that** the transfer roller(s) (9) is/are mounted so as to be pivotable about at least one axis (11).

## Revendications

1. Procédé de fabrication d'une pièce moulée en polymère (1, 100) renforcée en fibres longues (4, 40), les fibres longues (4, 40) imprégnées d'au moins un polymère au moins en partie plastifié, transféré dans un état de liquide en fusion au moyen d'un dispositif de manipulation (14) étant disposées de telle sorte sur un moule auxiliaire (8, 80) que l'orientation à plat et/ou en volume des fibres longues (4, 40) correspond pour l'essentiel à l'orientation, prévue dans la pièce moulée en polymère (1, 100), des fibres longues (4, 40), les fibres longues (4, 40) orientées étant ensuite transférées à l'aide du moule auxiliaire (8, 80) dans au moins un outil de moulage (21) ouvert en deux parties et y étant déposées, après quoi l'outil de moulage (21) est fermé et les fibres longues (4, 40) orientées imprégnées étant compressées seules ou avec ajout d'au moins un polymère supplémentaire formant au moins une partie de la matrice polymère de la pièce moulée en polymère (1, 100) à produire, plastifiable, transférable dans un état de liquide en fusion pour former la pièce moulée en polymère (1, 100) renforcée de fibres longues, la pièce moulée en polymère (1, 100) étant ensuite refroidie et retirée de l'outil de moulage (21), **caractérisé en ce que** les fibres longues (4, 40) sont enroulées sur les mandrins de bobinage (16, 160) du moule auxiliaire (8, 80), qu'au moins quelques-uns (16b, 16c) des mandrins de bobinage (16a, 16b, 16c) sont déplacés les uns par rapport aux autres selon l'orientation respectivement souhaitée des fibres longues (4) et que les fibres longues (4, 40) orientées enroulées sur les mandrins de bobinage (16, 160) du moule auxiliaire (8, 80) sont ensuite transférées par raclage des mandrins de bobinage (16, 160) dans l'outil de moulage (21) ouvert.

2. Procédé selon la revendication 1, **caractérisé en ce que** le moule auxiliaire (8, 80) est déplacé de telle sorte à l'aide du dispositif de manipulation (14), que les fibres longues (4) sont enroulées pour l'essentiel à la façon de bobines sur les mandrins de bobinage (16, 160).

3. Procédé selon la revendication 1 ou 2, **caractérisé en ce que** les fibres longues (4) sont d'abord enroulées pour l'essentiel à la façon de bobines sur les mandrins de bobinage (16) et qu'au moins quelques-uns (16b, 16c) des mandrins de bobinage (16a, 16b, 16c) sont ensuite déplacés les uns par rapport aux autres selon l'orientation respectivement souhaitée des fibres longues (4).

4. Procédé selon l'une quelconque des revendications 1 à 3, **caractérisé en ce que** les fibres longues (4, 40) enroulées sur les mandrins de bobinage (16, 160) sont chauffées.

5. Procédé selon la revendication 4, **caractérisé en ce que** les fibres longues (4, 40) sont chauffées par gaz chaud, notamment air chaud, ou par rayonnement électromagnétique, notamment dans la plage infrarouge.

6. Procédé selon l'une quelconque des revendications 1 à 5, **caractérisé en ce que** les fibres longues (4, 40) sont guidées pendant l'enroulement sur les mandrins de bobinage (16, 160) du moule auxiliaire (8, 80) via au moins un rouleau de transfert (9).

7. Procédé selon la revendication 6, **caractérisé en ce que** le ou les rouleaux de transfert (9) sont chauffés.

8. Procédé selon la revendication 6 ou 7, **caractérisé en ce que** les rouleaux de transfert (9) pivotent autour d'au moins un axe (11) selon la direction d'extension respective des fibres longues (4, 40).

9. Procédé selon l'une quelconque des revendications 1 à 8, **caractérisé en ce que** le polymère d'imprégnation des fibres longues (4, 40) est sélectionné dans le groupe composé par les élastomères thermoplastiques, notamment dans le groupe composé par les élastomères de polyoléfine thermoplastique.

10. Procédé selon la revendication 9, **caractérisé en ce que** le polymère d'imprégnation des fibres longues (4, 40) est sélectionné dans le groupe composé par les élastomères d'éthylène-propylène, dans le groupe composé par les copolymères d'éthylène et de propylène et/ou les terpolymères d'éthylène, de propylène et au moins un diène non conjugué, notamment le 1,4-hexadiène, le dicyclopentadiène et/ou le 5-éthylidène-2-norbornène.

11. Procédé selon la revendication 9, **caractérisé en ce que** le polymère d'imprégnation des fibres longues (4, 40) est sélectionné dans le groupe composé par les élastomères d'éthylène-acrylate, notamment dans le groupe composé par les terpolymères d'éthylène, de méthylacrylate et d'au moins un acide organique insaturé, par exemple l'acide acrylique, l'acide maléique ou leur équivalent.

12. Dispositif adapté à la mise en oeuvre d'un procédé de fabrication d'une pièce moulée en polymère (1, 100) renforcée en fibres longues selon l'une quelconque des revendications 1 à 11, avec un dispositif de manipulation (14) réalisé pour agencer des fibres longues (4, 40) imprégnées d'au moins un polymère au moins en partie plastifié transféré dans un état de liquide en fusion sur un moule auxiliaire (8, 80), le moule auxiliaire (8, 80) étant réalisé pour recevoir les fibres longues (4, 40) pour l'essentiel selon l'orientation plane et/ou en volume souhaitée des fibres longues (4, 40) dans la pièce moulée en polymère (1, 100) et avec au moins un outil de moulage (21) au moins en deux parties dans lequel les fibres longues (4, 40) peuvent être transférées et placées à l'aide du moule auxiliaire (8, 80), **caractérisé en ce que** le moule auxiliaire (8, 80) est doté de mandrins de bobinage (16, 160) permettant de recevoir les fibres longues (4, 40), un dispositif de raclage (30) étant associé aux mandrins de bobinage (16, 160), ledit dispositif étant réalisé pour racler les fibres longues (4, 40) enroulées sur les mandrins de bobinage (16, 160) et les mandrins de bobinage (16a, 16b, 16c) pouvant être déplacés les uns par rapport aux autres dans l'orientation respectivement souhaitée des fibres longues (4, 40).

13. Dispositif selon la revendication 12, **caractérisé en ce que** le dispositif de raclage (30) comporte une douille (29) engrenant au moins en partie le mandrin de bobinage (16, 160), la douille (19) et le mandrin de bobinage (16, 160) pouvant être déplacés l'un par rapport à l'autre dans la direction d'extension du mandrin de bobinage (16, 160).

14. Dispositif selon la revendication 13, **caractérisé en ce que** la douille (29) peut être déplacée dans la direction d'extension du mandrin de bobinage (16, 160).

15. Dispositif selon la revendication 14, **caractérisé en ce qu'**une unité piston-cylindre (34) est associée au col (29).

16. Dispositif selon l'une quelconque des revendications 12 à 15, **caractérisé en ce que** le moule auxiliaire (8, 80) est équipé d'un dispositif de chauffage (25).

17. Dispositif selon la revendication 16, **caractérisé en ce que** le dispositif de chauffage (25) est formé par au moins une soufflerie à gaz chaud, notamment une soufflerie à air chaud.

18. Dispositif selon la revendication 16, **caractérisé en ce que** le dispositif de chauffage (25) est formé par au moins un émetteur de rayonnement électromagnétique, notamment un émetteur de rayonnement infrarouge (24).

19. Dispositif selon l'une quelconque des revendications 12 à 18, **caractérisé en ce qu'**au moins un rouleau de transfert (9) lui est associé, ledit dispositif étant réalisé sur les mandrins de bobinage (16, 160) du moule auxiliaire (8, 80) pour le transfert des fibres longues (4, 40).

20. Dispositif selon la revendication 19, **caractérisé en ce que** le ou les rouleaux de transfert (9) sont disposés de façon à pouvoir pivoter autour d'au moins un axe (11).
